# EUROPÄISCHE PATENTSCHRIFT

(11) **EP 1 815 238 B1**
(45) Veröffentlichungstag und Bekanntmachung des Hinweises auf die Patenterteilung: **16.07.2008**
(21) Anmeldenummer: 04803308.8
(22) Anmeldetag: 26.11.2004
(51) Int. Cl.: G01N 27/414

(54) **Elektrisches Bauelement**
Electric component
Composant électrique

(43) Veröffentlichungstag der Anmeldung: 08.08.2007
(60) Teilanmeldung: 08001682.7
(73) Patentinhaber: Micronas GmbH, 79108 Freiburg i. Br. (DE)
(72) Erfinder: LEHMANN, Mirko, 79117 Freiburg (DE); FREUND, Ingo, 79117 Freiburg (DE)
(74) Vertreter: Huwer, Andreas
(86) Internationale Anmeldenummer: PCT/EP2004/013464
(87) Internationale Veröffentlichungsnummer: WO 2006/056226

(56) Entgegenhaltungen:
- WO-A-02/01647
- WO-A-03/014722
- US-A- 5 319 226

## Beschreibung

Die Erfindung betrifft ein elektrisches Bauelement nach dem Oberbegriff von Anspruch 1.

Ein derartiges elektrisches Bauelement ist aus der Praxis bekannt. Es weist einen CMOS-Chip mit einem Halbleiter-Substrat auf, in das als Sensor ein ionensensitiver Feldeffekttransistor (ISFET) integriert ist. Der Sensor hat einen als Gate-Elektrode ausgebildeten aktiven Oberflächenbereich, der zur Detektion von In einem flüssigen Medium enthaltenen Ionen mit dem Medium in Kontakt bringbar Ist. Auf dem Substrat sind mehrere aus Aluminium bestehende Leiterbahn-Schichten, sogenannte Layer angeordnet, in denen sich Leiterbahnen und/oder Abschnitte von Leiterbahnen erstrecken. Leiterbahnabschnitte von Leiterbahnen, die sich über mehrere Leiterbahn-Schichten verlaufen, sind durch Durchkontaktierungen miteinander verbunden. Zwischen den Leiterbahn-Schichten sowie zwischen der untersten, am dichtesten an dem Substrat angeordneten Leiterbahn-Schicht und dem Substrat ist jeweils eine elektrische Isolationsschicht vorgesehen. Auf dem aus den Leiterbahn-Schichten und den Isolationsschichten gebildeten Schichtstapel ist als Deckschicht eine Passivierungsschicht angeordnet. Die Leiterbahnen verbinden Drain und Source des ISFET mit davon beabstandeten, an der Oberfläche des CMOS-Chips angeordneten Bondpads.

Der CMOS-Chip ist mit einer dicht an ihm anliegenden Kunststoff-Vergussmasse umkapselt, die eine Öffnung hat, die mit dem aktiven Oberflächenbereich verbunden ist und in die das flüssige Medium einfüllbar ist. Dabei gerät der das Medium an einer Interakflonsfläche mit dem Chip in Kontakt, die sich über einen Teilbereich der Passivierungsschicht und den aktiven Oberflächenbereich erstreckt. Die Leiterbahn-Schichten und die isolationsschichten erstrecken sich jeweils bis in den Bereich des Chips, der von der Interaktionsfläche überdeckt ist. Die Passivierungsschicht und die Isolationsschichten dienen als Korrosionsschutz für die Leiterbahn-Schichten, der verhindern soll, dass die Leiterbahn-Schichten mit dem flüssigen Medium in Kontakt geraten, in der Praxis hat sich jedoch gezeigt, dass die Passivierungsschicht nur einen begrenzten Korrosionsschutz der Leiterbahn-Schichten ermöglicht und dass die Chips nur eine relativ geringe Lebensdauer aufweisen, wenn die Öffnung mit einem flüssigen oder pastösen Medium befüllt ist. Kommt eine Leiterbahn beispielsweise aufgrund eines Defekts an der Passivierungsschicht mit dem Medium in Kontakt, kann dies zu einem Ausfall des kompletten Chips führen.

Aus F. Faßbender et. al., Optimization of passivation layers for corrosion protection of sllicon-based microelectrode arrays, Sensors and Actuators B 68 (2000), S. 128-1 33 ist auch bereits ein Halbleiter-Chip bekannt, der ein Silizium-Substrat aufweist, auf dem ein Array mit 16 etwa rechteckförmigen Elektroden angeordnet ist. Die Elektroden sind über Leiterbahnen, die in einer einzigen Leiterbahnschicht verlaufen, mit Bondpads verbunden. Die Leiterbahnschicht ist mit einer Passivierungsschicht abgedeckt. Bei der Herstellung des Chips wird zunächst auf dem Halbleiter-Substrat mit Hilfe einer Wärmebehandlung eine Siliziumdioxid-Schicht erzeugt. In diese werden an den Stellen, an denen später die Leiterbahnen sein sollen, grabenförmige Vertiefungen eingebracht in diesen wird ein Metall deponiert, welches die Leiterbahnen bildet. Durch die versenkte Anordnung der Leiterbahnen in der Siliziumdioxid-Schicht ergibt sich eine im wesentlichen plane Oberfläche des Chips. Durch diese sollen mechanische Spannungen in der Passivierungsschicht, die zu Rissen führen können, über die ein mit den Elektroden zu untersuchender Analyt mit der Leiterbahnschicht in Kontakt geraten und an der Leiterbahnschicht Korrosion verursachen kann, vermieden werden. Zwar kann durch diese Maßnahme die Korrosionsbeständigkeit des Chips erhöht und somit die Lebensdauer des Chips verlängert werden. Das Einbringen der Gräben in die auf dem Substrat befindliche Siliziumdioxid-Schicht erfordert jedoch bei der Fertigung des Chips einen nicht unerheblichen Zusatzaufwand, insbesondere bei einem CMOS-Prozess.

Aus WO 02/01647 A1 ist ferner ein elektrisches Bauelement mit einem CMOS-Sensor-Chip bekannt, der ein Substrat hat, auf dem eine Passivierungsschicht und eine, einen aktiven Oberflächenbereich aufweisende Struktur für einen Sensor angeordnet sind. Der Sensor-Chip hat eine sich über die Passivierungsschicht und den aktiven Oberflächenbereich erstreckende Interaktionsfläche, die mit einem flüssigen Medium in Kontakt steht. Zwischen der Passivierungsschicht und dem Substrat ist eine erste elektrische Isolationsschicht vorgesehen. Zwischen der Passivierungsschicht und der ersten Isolationsschicht ist bereichsweise eine erste Leiterbahn-Schicht angeordnet, die mehrere seitlich voneinander beabstandete, elektrisch leitende Schichtbereiche hat. Zwischen der Passivierungsschicht und der ersten lsolaflonsschicht beträgt der seitliche Abstand der Schichtbereiche etwa das 3- bis 8-fache der Dicke der Leiterbahn-Schicht. Zwischen der ersten Isolationsschicht und dem Substrat ist eine zweite elektrische Isolationsschicht vorgesehen. Die Schichtbereiche der Leiterbahn-Schicht sind mit der Sensor-Struktur verbunden. Auch bei diesem Bauelement ermöglicht die Passivierungsschicht nur einen begrenzten Korrosionsschutz für die Leiterbahn-Schicht.

Aus WO 03/014722 A1 und US 5 319 226 sind ferner elektrische Bauelemente mit einem Sensor-Chip bekannt, der ein Substrat hat, auf dem eine Passivierungsschicht und eine, einen aktiven Oberflächenbereich aufweisende Struktur für einen Sensor angeordnet sind. Dabei ist der aktive Oberflächenbereich jeweils in einer in der Passivierungsschicht vorgesehenen Öffnung angeordnet. Innerhalb der Öffnung hat der Sensor-Chip eine sich über den aktiven Oberflächenbereich erstreckende lnteraktionsfläche, die bei der US 5 319 226 mit einem flüssigen Medium in Kontakt steht und auf der bei der WO 03/014722 A1 eine DNA-Probe immobilisiert ist. Außerhalb des von der Öffnung überdeckten Bereichs sind Leiterbahnen angeordnet, die von der Öffnung seitlich beabstandet sind. Eine durch eine Vergussmasse gebildete Verkapselung ist bei diesen Bauelementen nicht vorhanden.

Es besteht deshalb die Aufgabe, ein elektrisches Bauelement nach dem Oberbegriff von Anspruch 1 zu schaffen, das kostengünstig mit den bei der Halbleiterfertigung üblichen Standardprozessen herstellbar ist, das aber dennoch eine gute Korrosionsbeständigkeit sowie eine hohe Lebensdauer ermöglicht

Diese Aufgabe wird mit den Merkmalen des Patentanspruchs 1 gelöst.

Erfindungsgemäß sind zumindest In dem von der lnterakflonsflöche überdeckten Bereich der ersten Leiterbahn-Schicht die Abstände zwischen seitlich zueinander benachbarten, voneinander beabstandeten elektrisch leitenden Schichtbereichen dieser Leiterbahn-Schicht jeweils kleiner sind als das 1,2-fache der Dicke der Leiterbahn-Schicht. Dadurch wird auf einfache Weise erreicht, dass die der Öffnung zugewandte, in Gebrauchsstellung mit dem flüssigen oder pastösen Medium in Kontakt befindliche Oberfläche der auf der ersten Leiterbahn-Schicht angeordneten Passivierungsschicht in den Bereichen, welche die Abstände zwischen den Schichtbereichen der ersten Leiterbahn-Schicht überdecken, weitgehend plan ist. Somit ist die Gefahr, dass es beim Auftreten von mechanischen Spannungen in dem Chip zu einer Rissbildung in der Passivierungsschicht kommt, erheblich reduziert. Das erfindungsgemäße elektrische Bauelement weist deshalb eine gute Korrosionsbeständigkeit und eine hohe Lebensdauer auf Der Chip des Bauelements ist mit Standardprozessen der Halbleiterfertigung üblichen kostengünstig herstellbar. Die für den Kontakt mit dem Medium vorgesehene Interaktionsfläche erstreckt sich vorzugsweise über den gesamten von der Öffnung der Verkapselung überdeckten Oberflächenbereich des Chips.

Bei einer bevorzugten Ausführungsform der Erfindung sind zumindest in dem von der Interakflonsfläche überdeckten Bereich der ersten Leiterbahn-Schicht die Abstände zwischen den seitlich zueinander benachbarten Schichtbereichen dieser Leiterbahn-Schicht jeweils kleiner sind als das 1,1-fache, insbesondere kleiner als das 1,0-fache, gegebenenfalls kleiner als das 0,9-fache und bevorzugt kleiner als 0,8-fache der Dicke der ersten Leiterbahn-Schicht Das elektrische Bauelement ermöglicht dann eine noch bessere Korrosionsbeständigkeit.

Vorteilhaft ist, wenn die zweite Leiterbahnschicht mindestens zwei seitlich voneinander beabstandete, elektrisch leitende Schichtbereiche aufweist, wenn zumindest in dem von der Interaktionsfläche überdeckten Bereich der ersten Leiterbahn-Schicht die Abstände zwischen den seitlich zueinander benachbarten Schichtbereichen dieser Leiterbahn-Schicht jeweils kleiner sind als das 1,2-fache, Insbesondere das 1,1-fache, gegebenenfalls als das 1,0-fache, eventuell das 0,9-fache und bevorzugt als das 0,8-fache der Dicke der zweiten Leiterbahn-Schicht. Dadurch ergibt sich eine noch planere Oberfläche der Passivierungsschicht, wodurch die Gefahr, dass sich beim Auftreten von mechanischen Spannungen in dem Chip ein Riss in der Passivierungsschicht bildet, weiter reduziert wird. Das elektrische Bauelement weist also eine noch größere Lebensdauer auf

Bei einer zweckmäßigen Ausgestaltung der Erfindung ist auf dem Substrat außerhalb des von der Öffnung überdeckten Bereichs eine Struktur für eine elektronische Schaltung angeordnet, insbesondere für eine Auswerteeinrichtung, wobei diese Struktur über wenigstens eine der Leiterbahn-Schichten elektrisch mit der Sensor- und/oder Aktuator-Struktur verbunden ist. Die aus der elektronischen Schaltung und dem Sensor und/oder Aktuator bestehende Schaltungsanordnung ermöglicht dann besonders kompakte Abmessungen. Außerdem ist die Schaltungsanordnung mit Methoden der Halbleiterfertigung kostengünstig in Serienfertigung herstellbar.

Nachfolgend ist ein Ausführungsbeispiel der Erfindung anhand der Zeichnung näher erläutert. Es zeigt:

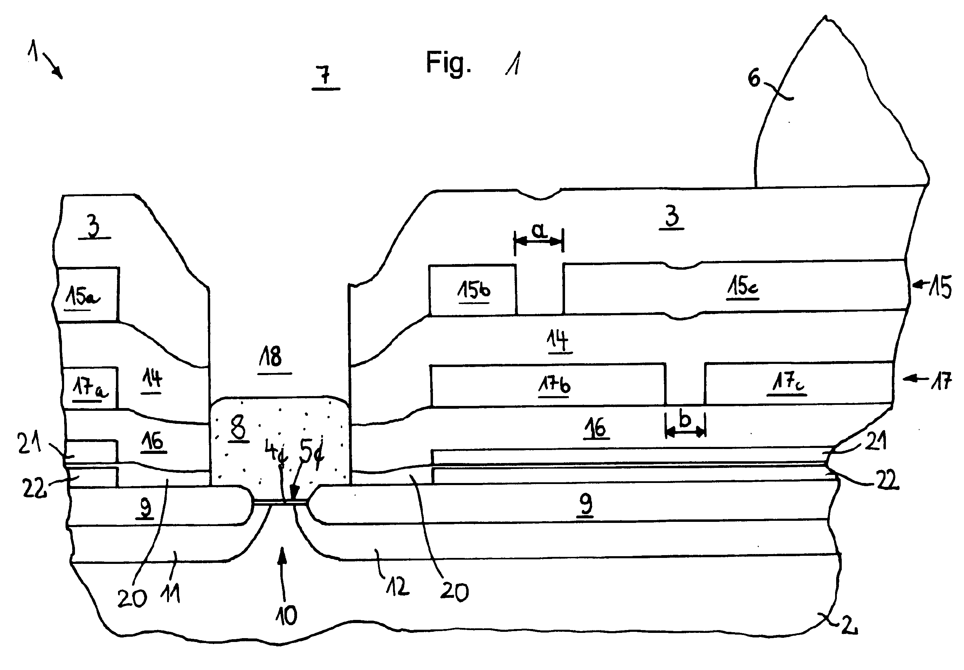

- Fig. 1: einen Teilquerschnitt durch das Ausführungsbeispiel des erfindungsgemäßen Bauelements.

Ein in Fig. 1 im Ganzen mit 1 bezeichnetes elektrisches Bauelement weist einen Sensor-Chip auf, der ein Halbleiter-Substrat 2 aus p-dotiertem Silizium hat, auf dem Strukturen für Sensoren angeordnet sind. Als Decklage weist der Sensor-Chip eine Passivierungsschicht 3 auf, die vorzugsweise aus Siliziumnitrid und/oder Siliziumdioxid besteht und mehrere 100 nm bis einige µm dick sein kann. Der Chip ist von einer in der Zeichnung nur teilweise dargestellten, durch eine Vergussmasse gebildeten Verkapselung 6 umgeben, die eine Öffnung 7 hat. Zumindest der die Öffnung umgrenzende Rand der Verkapselung 6 liegt dichtend an dem Chip an. In die Öffnung 7 kann ein zu untersuchendes flüssiges oder pastöses Medium eingebracht werden, das den Chip an einer Interaktionsfläche kontaktiert. Es ist denkbar, dass sich die Interakflonsfläche nur über einen Teil des von der Öffnung 7 überdeckten Oberflächenbereichs des Chips 1 erstreckt, beispielsweise wenn dieser nur bereichsweise in ein flüssiges Medium 8 eingetaucht ist.

In das Substrat 2 ist ein Feldeffekt-Transistor mit einer Source 11, einer Drain 12 und einem Kanalbereich 10 integriert Benachbart zu dem Kanalbereich 10 weist der Feldeffekt-Transistor eine Gate-Elektrode 4 mit einem aktiven Oberflächenbereich 5 auf Mit Hilfe des Feldeffekt-Transistors können beispielsweise lonen, die in einem in der Öffnung 7 befindlichen, mit der Gate-Elektrode 4 in Kontakt stehenden Medium 8 angeordnet sind, detektiert werden. Auf der Source 11 und der Drain 12 ist eine Feldoxidschicht 9 angeordnet, die benachbart zu dem Kanalbereich 10 eine Unterbrechung aufweist, welche die Gote-Elektrode 4 überbrückt.

Zwischen der Passivierungsschicht 3 und dem Substrat 2 ist eine erste elektrische Isolationsschicht 14 angeordnet, die als Inter Metallic Dielectric (IMD) ausgebildet ist. Zwischen der Passivierungsschicht 3 und der ersten Isolationsschicht 14 ist bereichsweise eine erste Leiterbahn-Schicht 15 vorgesehen, die aus Aluminium besteht und mehrere elektrisch leitende Schichtbereiche 15a, 15b, 15c aufweist Die Schichtbereiche 15a, 15b sind als Leiterbahnen ausgebildet. Der Schichtbereich 15c wird nicht als Leiterbahn genutzt in dem von der Öffnung 7 und der Passivierungsschicht 3 überdeckten Bereich der ersten Leiterbahn-Schicht 15 sind die Abstände a zwischen den seitlich zueinander benachbarten Schichtbereichen 15a, 15b, 15c jeweils kleiner sind als die Dicke der Leiterbahn-Schicht 15.

Deutlich ist erkennbar, dass die erste Leiterbahn-Schicht 15 in dem von der Öffnung 7 überdeckten Bereich des Chips in einer normal zur Erstreckungsebene des Chips verlaufenden Richtung durch die Passivierungsschicht 3 und die darunter befindliche erste Isolationsschicht 14 von der Öffnung 7 beabstandet ist. Dadurch wird eine gute Korrosionsbestständigkeit der ersten Leiterbahn-Schicht 15 gegen das in der Öffnung 7 befindliche Medium 8 erreicht.

Zwischen der ersten Isolationsschicht 14 und dem Substrat 2 ist als zweite elektrische Isolationsschicht 16 eine Inter Layer Dielectric (ILD) angeordnet. Zwischen der ersten Isolationsschicht 14 und der zweiten Isolationsschicht 16 ist bereichsweise eine zweite Leiterbahn-Schicht 17 angeordnet, die aus Aluminium besteht. Die zweite Leiterbahn-Schicht 17 und die erste Isolationsschicht 14 werden von der Unterbrechung 18 durchsetzt. Die zweite Leiterbahn-Schicht 17 endet mit Abstand zu der Unterbrechung 18 und ist durch die erste Isolationsschicht 14 und die zweite Isolationsschicht 16 gegen die Unterbrechung 18 abgedichtet.

Die zweite Leiterbahn-Schicht 17 hat mehrere elektrisch leitende Schichtbereiche 17a, 17b, 17c. Die Schichtbereiche 17a, 17b sind als Leiterbahnen ausgebildet, während der Schichtbereich 17c nicht als Leiterbahn genutzt wird. In dem von der Öffnung 7 und der Passivierungsschicht 3 überdeckten Bereich der zweiten Leiterbahn-Schicht 17 sind die Abstände b zwischen den seitlich zueinander benachbarten Schichtbereichen 17a, 17b, 17c jeweils kleiner sind als die Dicke der Leiterbahn-Schicht 17. Diese entspricht etwa der Dicke der ersten elektrische Isolationsschicht 14, der ersten Leiterbahn-Schicht 15 und der Passivierungsschicht 3. Durch die geringen Seitenabstände a, b zwischen den Schichtbereichen 15a, 15b, 15c der ersten Leiterbahn-Schicht 15 bzw. den Schichtbereichen 17a, 17b, 17c der zweiten Leiterbahn-Schicht 17 sind die Bereiche der Oberfläche der Passivierungsschicht 3, die der orthogonalen Projektion der Zwischenräume zwischen zueinander benachbart nebeneinander angeordneten Schichtbereiche 15a, 15b, 15c, 17a, 17b, 17c einer Leiterbahn-Schicht 15, 17 entsprechen, jeweils weitgehend eben. Dadurch ist die Gefahr, dass beim Auftreten von mechanischen Spannungen in dem Chip, sich in der Passivierungsschicht 3 ein Riss bildet, entsprechend reduziert.

Zwischen der zweiten Isolationsschicht 16 und der Feldoxidschicht 9 ist eine als Oxidschicht ausgebildete dritte elektrische Isolationsschicht 20 angeordnet. Zwischen dieser und der zweiten Isolationsschicht 16 ist bereichsweise eine dritte Leiterbahnschicht 21 vorgesehen, die aus Polysiliziumschicht besteht und Leiterbahnen bildet. Zwischen der dritten Isolationsschicht 20 und der Feldoxidschicht 9 ist eine vierte Leiterbahnschicht 22 angeordnet, die ebenfalls aus Polysiliziumschicht 22 besteht und weitere elektrische Leiterbahnen enthält.

Erwähnt werden soll noch, dass die Leiterbahnen der Leiterbahnschichten 15, 17, 21, 22 durch Durchkontaktierungen miteinander verbunden sein können. Das Substrat 2 kann auch Glas bestehen.

## Patentansprüche

1. Elektrisches Bauelement (1) mit einem Sensor- und/oder Aktuator-Chlp, insbesondere einem CMOS-Chip, der ein Substrat (2) hat, auf dem eine Passivierungsschicht (3) und mindestens eine, zumindest einen aktiven Oberflächenbereich (5) aufweisende Struktur für einen Sensor und/oder Aktuator angeordnet sind, wobei der Chip von einer durch eine Vergussmasse gebildeten Verkapselung (6) umgeben ist, die zumindest eine Öffnung (7) hat, welche einen Zugang zu dem wenigstens einen aktiven Oberflächenbereich (5) und der Passivierungsschicht (3) bildet, wobei der Chip in der Öffnung eine sich zumindest bereichsweise über die Passivierungsschicht (3) und den aktiven Oberflächenbereich (5) erstreckende Interahtionsfläche hat die in Gebrauchsstellung mit einem flüssigen oder pastösen Medium in Kontakt steht, wobei zwischen der Passivierungsschicht (3) und dem Substrat (2) eine erste elektrische Isolationsschicht (14) vorgesehen ist, wobei zwischen der Passivierungsschicht (3) und der ersten Isolationsschicht (14) bereichsweise eine erste Leiterbahn-Schicht (15) angeordnet ist, die mindestens zwei seitlich voneinander beabstandete, elektrisch leitende Schichtbereiche (15a, 15b, 15c) aufweist, wobei zwischen der ersten Isolationsschicht (14) und dem Substrat (2) eine zweite elektrische Isolationsschicht (16) vorgesehen ist, wobei zwischen der ersten Isolationsschicht (14) und der zweiten Isolationsschicht (16) eine zweite Leiterbahn-Schicht (17) angeordnet ist, **dadurch gekennzeichnet, dass** zumindest in dem von der Interaktionsfläche überdeckten Bereich der ersten Leiterbahn-Schicht (15) die Abstände (a) zwischen den seit lich zueinander benachbarten, elektrisch leitenden Schichtbereichen (15a, 15b, 15c) jeweils kleiner sind als das 1,2-fache der Dicke dieser Leiterbahn-Schicht (15).

2. Elektrisches Bauelement (1) nach Anspruch 1, **dadurch gekennzeichnet, dass** zumindest in dem von der Interaktionsfläche überdeckten Bereich der ersten Leiterbahn-Schicht (15) die Abstände (a) zwischen den seitlich zueinander benachbarten Schichtbereichen (15a, 15b, 15c) dieser Leiterbahn-Schicht (15) jeweils kleiner sind als das 1,1-fache, insbesondere kleiner als das 1,0-fache, gegebenenfalls kleiner als das 0,9-fache und bevorzugt kleiner als 0,8-fache der Dicke der ersten Lelterbahn-Schicht (15).

3. Elektrisches Bauelement (1) nach Anspruch 1 oder 2, **dadurch gekennzeichnet dass** die zweite Leiterbahnschicht (17) mindestens zwei seitlich voneinander beabstandete, elektrisch leitende Schichtbereiche (17a, 17b, 17c) aufweist, dass zumindest in dem von der Interaktionsfläche überdeckten Bereich der zweiten Leiterbahn-Schicht (17) die Abstände (b) zwischen seitlich zueinander benachbarten Schichtbereichen (17a, 17b, 17c) dieser Leiterbahn-Schicht (17) jeweils kleiner sind als das 1,2-fache, Insbesondere das 1,1-fache, gegebenenfalls als das 1,0-fache, eventuell das 0,9-fache und bevorzugt als das 0,8-fache der Dicke der zweiten Leiterbahn-Schicht (17).

4. Elektrisches Bauelement (1) nach einem der Ansprüche 1 bis 3, **dadurch gekennzeichnet, dass** auf dem Substrat (2) außerhalb des von der Öffnung (7) überdeckten Bereichs eine Struktur für eine elektronische Schaltung angeordnet ist, insbesondere für eine Auswerteeinrichtung, und dass diese Struktur über wenigstens eine der Leiterbahn-Schichten (15, 17) elektrisch mit der Sensor- und/oder Aktuator-Struktur verbunden ist.

## Claims

1. Electric component (1) having a sensor and/or actuator chip, in particular a CMOS chip, which has a substrate (2) on which a passivation layer (3) and at least one structure, which has at least one active surface region (5) and is intended for a sensor and/or an actuator, are arranged, the chip being surrounded by an encapsulation (6) which is formed by a casting compound and has at least one opening (7) which forms an access to the at least one active surface region (5) and to the passivation layer (3), the chip in the opening having an interaction area which extends, at least in regions, over the passivation layer (3) and the active surface region (5) and is in contact with a liquid or pasty medium in the position of use, a first electrical insulation layer (14) being provided between the passivation layer (3) and the substrate (2), a first interconnect layer (15), which has at least two electrically conductive layer regions (15a, 15b, 15c) which are laterally spaced apart from one another, being arranged in regions between the passivation layer (3) and the first insulation layer (14), a second electrical insulation layer (16) being provided between the first insulation layer (14) and the substrate (2), a second interconnect layer (17) being arranged between the first insulation layer (14) and the second insulation layer (16), **characterized in that**, at least **in that** region of the first interconnect layer (15) which is covered by the interaction area, the distances (a) between the laterally adjacent, electrically conductive layer regions (15a, 15b, 15c) are respectively less than 1.2 times the thickness of this interconnect layer (15) .

2. Electric component (1) according to Claim 1, **characterized in that**, at least **in that** region of the first interconnect layer (15) which is covered by the interaction area, the distances (a) between the laterally adjacent layer regions (15a, 15b, 15c) of this interconnect layer (15) are respectively less than 1.1 times, in particular less than 1.0 times, optionally less than 0.9 times, and preferably less than 0.8 times, the thickness of the first interconnect layer (15).

3. Electric component (1) according to Claim 1 or 2, **characterized in that** the second interconnect layer (17) has at least two electrically conductive layer regions (17a, 17b, 17c) which are laterally spaced apart from one another, and **in that**, at least **in that** region of the second interconnect layer (17) which is covered by the interaction area, the distances (b) between laterally adjacent layer regions (17a, 17b, 17c) of this interconnect layer (17) are respectively less than 1.2 times, in particular 1.1 times, optionally 1.0 times, possibly 0.9 times, and preferably 0.8 times, the thickness of the second interconnect layer (17).

4. Electric component (1) according to one of Claims 1 to 3, **characterized in that** a structure for an electronic circuit, in particular for an evaluation device, is arranged on the substrate (2) outside the region covered by the opening (7), and **in that** this structure is electrically connected to the sensor and/or actuator structure by means of at least one of the interconnect layers (15, 17).

## Revendications

1. Composant électrique (1) doté d'une puce de détecteur et/ou d'une puce d'actionneur, en particulier d'une puce CMOS qui présente un substrat (2) sur lequel sont disposées une couche de passivation (3) et au moins une structure de détecteur et/ou d'actionneur qui présente au moins une partie active (5) de surface, la puce étant englobée dans une encapsulation (6) formée d'une pâte de scellement et qui présente au moins une ouverture (7) qui forme un accès vers la ou les parties actives (5) de surface et la couche de passivation (3), la puce présentant dans l'ouverture une surface d'interaction dont au moins certaines parties s'étendent sur la couche de passivation (3) et la partie active (5) de surface et qui en position d'utilisation est en contact avec un fluide liquide ou pâteux, une première couche (14) d'isolation électrique étant prévue entre la couche de passivation (3) et le substrat (2), au moins certaines parties d'une première couche (15) de pistes conductrices étant disposée entre la couche de passivation (3) et la première couche d'isolation (14) et présentant au moins deux parties électriquement conductrices (15a, 15b, 15c) situées à distance latérale les unes des autres, une deuxième couche d'isolation électrique (16) étant prévue entre la première couche d'isolation (14) et le substrat (2), une deuxième couche (17) de pistes conductrices étant disposée entre la première couche d'isolation (14) et la couche d'isolation (16),
**caractérisé en ce que**
au moins dans la partie de la première couche (15) de pistes conductrices recouverte par la surface d'interaction, les distances (a) entre les parties électriquement conductrices (15a, 15b, 15c) voisines latéralement les unes des autres dans cette couche (15) de pistes conductrices sont toutes inférieures à 1,2 fois l'épaisseur de cette couche (15) de pistes conductrices.

2. Composant électrique (1) selon la revendication (1), **caractérisé en ce qu'**au moins dans la partie de la première couche (15) de pistes conductrices recouverte par la surface d'interaction, les distances (a) entre les parties (15a, 15b, 15c) voisines latéralement l'une de l'autre de cette couche (15) de pistes conductrices sont toutes inférieures à 1,1 fois, en particulier inférieures à 1,0 fois, éventuellement inférieures à 0,9 fois et de préférence inférieures à 0,8 fois l'épaisseur de la première couche (15) de pistes conductrices.

3. Composant électrique (1) selon les revendications 1 ou 2, **caractérisé en ce que** la deuxième couche (17) de pistes conductrices présente au moins deux parties électriquement conductrices (17a, 17b, 17c) situées à distance latérale l'une de l'autre et **en ce qu'**au moins dans la partie de la deuxième couche (17) de pistes conductrices recouverte par la surface d'interaction, les distances (b) entre les parties (17a, 17b, 17c) voisines latéralement les unes des autres de cette couche (17) de pistes conductrices sont toutes inférieures à 1,2 fois, en particulier à 1,1 fois, et éventuellement à 1,0 fois, le cas échéant à 0,9 fois et de préférence à 0,8 fois l'épaisseur de la deuxième couche (17) de pistes conductrices.

4. Composant électrique (1) selon l'une des revendications 1 à 3, **caractérisé en ce qu'**une structure pour un circuit électronique, en particulier pour un dispositif d'évaluation, est disposée sur le substrat (2) au-dessus de la partie recouverte par l'ouverture (7) et **en ce que** cette structure est reliée électriquement à la structure de détecteur et/ou à la structure d'actionneur par au moins une des couches (15, 17) de pistes conductrices.
